# EUROPÄISCHE PATENTSCHRIFT

(11) **EP 1 547 884 B1**
(45) Veröffentlichungstag und Bekanntmachung des Hinweises auf die Patenterteilung: **19.10.2011**
(21) Anmeldenummer: 05102263.0
(22) Anmeldetag: 16.11.2001
(51) Int. Cl.: B60S 1/38, B60S 1/40

(54) **Wischblatt zum Reinigen von Scheiben insbesondere von Kraftfahrzeugen**
Wiper blade for cleaning glass panes, in particular of vehicles
Balai d'essuyage de surfaces vitrées, en particulier pour véhicules

(30) Priorität: 18.11.2000 DE 10057253
(43) Veröffentlichungstag der Anmeldung: 29.06.2005
(62) Teilanmeldung aus: 01996484.0
(73) Patentinhaber: ROBERT BOSCH GMBH, 70442 Stuttgart (DE)
(72) Erfinder: Breesch, Frans, 3840, Borgloon (BE)

(56) Entgegenhaltungen:
- WO-A-00/34090
- WO-A-00/38964
- DE-A1- 3 709 810
- FR-A- 2 731 191

## Beschreibung

### Stand der Technik

Bei einem Wischblatt der im Oberbegriff des unabhängigen Anspruchs bezeichneten Art soll das Tragelement des Wischblatts über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements-also wenn das Wischblatt nicht an der Scheibe anliegl-werden die Enden der in Betrieb des Wischblatts vollständig an der Scheibe angelegten Wischleiste durch das angespannte Tragelement zur Scheibe belastet, auch wenn sich die Krümmungsradien von spärisch gekrümmterFahrzeugscheiben bei jeder Wischblattpositionändern. Die Künmung des Wischblatts mußalso etwas stärker sein als die im Wischfeld an der zu wischenden Scheibe gemessene stärkste Krümmung. Das Tragelement ersetzt somit die aufwendige, zur Verteilung des Anpreßdrucks erforderliche Tragbügelkonstruktion mit zwei in der Wischleiste angeordneten, der Querversteifung der gummielastischen Wischleiste dienenden Federschienen, wie sie bei herkömmlichen Wischblättern praktiziert wird (DE-B-1247 16 1).

Bei einem bekannten Wischhebel mit einem Wischblatt, bei dem aus Gründen der Auflage-Druckverteilung das Tragelement im Wischblattmittelbereich weitüber die Breite der Wischleiste hinausragt (DE-B-1247161), kann die auf der dem Fahrtwind zugewandten Vorderseite unter dem Aufbau eines Überdrucks von diesem untergriffen werden. Andererseits baut sich auf der vom Fahrtwind abgewandten Rückseite wegen des erwähnten Wischblattaufbaus ein erheblicher Unterdruck auf. In Betrieb verändert das eine Pendelbewegung ausführende Wischblatt zwar seine Lage in Bezug auf den anströmenden Fahrtwind ständig, doch ist auch dann stets seine eine Längsseite diesem mehr oder weniger stark zugewandt und wird deshalb auch als Vorderseite bezeichnet, während seine andere Längsseite demzufolge auch als Rückseite angesehen wird. Im Zusammenwirken dieser beiden vorerwähnten Drucke, die beide dem Wischblatt-Anpressdruck entgegengerichtet sind, werden diese bei höheren Fahrgeschwindigkeiten zumindest so verringert, dass kein ordnungsgemäßes Wischergebnis mehr möglich ist. Um diesem ungünstigen Strömungsverhalten abzuhelfen, ist bei einem bekannten, gattungsgemäßen Wischhebel (DE 198 56299.3 A1) an der oberen Bandfläche des Tragelements eine Windabweisleiste mit einer der hauptsächlichen Strömungsrichtung zugewandten Anströmfläche angeordnet. Diese Windabweisleiste hat zwei Abschnitte oder Teilleisten, die sich jeweils von der Verbindungsvorrichtung aus zu den Enden des Tragelements beziehungsweise des Wischblatts erstrecken. Es ergibt sich somit eine Aussparung im Verlauf der Windabweisleiste für die Positionierung der Verbindungsvorrichtung. Diese optische Unterbrechung der Windabweisleiste wird insbesondere von den Herstellern von Fahrzeugen der gehobenen Klasse aus Gründen des Stylings beanstandet. Darüber hinaus trägt diese Unterbrechung der an der Windabweisleiste vorhandenen Anströmfläche durch die sich dabei ergebenden Kanten und Spalten auch zu einer unerwünschten Verstärkung von Fahrtwindgeräuschen bei.

Zwar ist es bei dem gattungsgemäßen Wischhebel bekannt, den Querschnitt eines im Längsmittelbereich des Wischblatts an dessen oberen Bandfläche sitzenden Halters für zwei zum Tragelement gehörende Federschienen an den Querschnitt der sich beidseitig des Halters erstreckenden Windabweisleistenabschnitte anzupassen, doch liegen auch dort die Mittel zum Anschließen des Wischblatts am Wischerarm völlig frei, so dass auch dieser Wischerarm und Wischblatt umfassende Wischhebel mit den schon beschriebenen Nachteilen behaftet ist.

Weiterhin ist aus der DE-A-37 09 810 ein Wischblatt mit den Merkmalen des Oberbegriffs des Anspruchs 1 bekannt. Gemäß der Erfindung wird ein Wischblatt mit den Merkmalen des Anspruchs 1 vorgesehen.

### Vorteile der Erfindung

Durch die Anordnung der Abdeckkappe im Anschlußbereich zwischen Wischerarm und Wischblatt kann durch eine entsprechende Ausformung der Kappe ein formschöner Übergang zwischen den beiden, der Verbindungsvorrichtung benachbarten Windabweisleisten-Abschnitte erreicht werden. Dabei ist es möglich, zumindest die Kappenabschnitte, welche die ihnen benachbarten Bereiche dieser Abschnitte auch überdecken können, an die Formgebung der Windabweisleiste anzupassen. Weiter werden dadurch Fahrtwindgeräusche erzeugende, einer laminaren Strömung des Fahrtwindes entgegenstehenden Problemzonen am Wischhebel vermieden. Schließlich schützen die Abdeckkappe die empfindliche Gelenkverbindung zwischen Wischerarm und Wischblatt gegen Umwelteinflüsse wie z.B. Strassenschmutz, Schnee, Eis, ect.

Eine besonders einfache Anpassung der Kappe an die Ausgestaltung des Wischblatts wird erfindungsgemäß dadurch möglich, daß die Kappe am Wischblatt gehalten, und mit dem Wischblatt verrastet ist.

Dies wird erfindungsgemäß kostengünstig dadurch erreicht, dass die im Querschnitt U-förmige Abdeckkappe aus einem elastischen Kunststoff gefertigt und mit elastisch auslenkbaren Rastmitteln versehen ist, denen Gegenlastmittel des Wischblatts zugeordnet sind. Wenn die Gegenrastmittel des Wischblatts an den äusseren Längskanten des bandartigen Tragelements ausgebildet sind, sind keine besonderen Maßnahmen zur Ausbildung der Gegenrastmittel erforderlich. Eine einfache Montage des Wischhebels ergibt sich erfindungsgemäß dadurch, daß die Kappe mit einer Durchtrittsöffnung fürden Wischerarm versehen ist.

Um eine stabile, dem Druck des anströmenden Fahrtwinds gewachsene Rastverbindung zu erhalten, ist die Abdeckkappe mit zumindest einer mit der oberen Bandfläche des Tragelements zusammenwirkenden Abstützung versehen, wobei an die Kappe elastisch auslenkbare, das Tragelement untergreifende, als Rastmittel dienende Rastnasen angeformt sind.

Hinsichtlich der Flexibilität des Wischblatts beziehungsweise des Tragelements kann es besonders vorteilhaft sein, wenn im Bereich der Haltekrallen des als Verbindungsstück dienenden Kupplungsteils die Kappe an ihrer elastisch auslenkbaren Innenwand mit die Haltekrallen übergreifenden klammerartigen Sicherungskrallen versehen ist.

Weil im Laufe der Zeit das Material der Windabweisleiste altert-was mit einer gewissen Schrumpfung verbunden ist-können sich zwischen der Kappe und den diesen zugewandten Stirnflächen der Windabweisleisten-Teilabschnitte Luftspalte ergeben, die zu den schon geschilderten Nachleiten hinsichtlich der Optik und der Geräuschverstärkung führen. Dies kann gemäß einer Weiterbildung der Erfindung dadurch vermieden werden, dass Verlängerungen an der Kappe die ihnen zugewandten Endabschnitte der Windabweisleisten-Teilabschnitteüberdecken.

Aus optischen Gründen und aus Gründen der unerwünschten Fahrtwind-Geräuscherzeugung kann es von Vorteil sein, wenn die Abdeckkappe an ihrer einen Längswand in Fortführung der Anströmkehlung an der Windabweisleiste mit einer Hohlkehle versehen ist.

Weitere vorteilhafte Weiterbildungen und Ausgestaltungen der Erfindung sind in der nachfolgenden Beschreibung vor in den dazugehörigen Zeichnung dargestellten Ausführungsbeispielen angegeben.

### Zeichnung

In der Zeichnung zeigen:
Figur 1 eine Seitenansicht eines Wischhebels, dessen Wischblatt mit einer Windabweisleiste versehen ist, unmaßstäblich gezeichnet,
Figur 2 eine vergrösserte Darstellung einer in Figur 1 mit II bezeichneten Einzelheit, mit der Querschnittsfläche der Windabweisleiste,
Figur 3 eine zum Wischhebel gehörende Abdeckkappe perspektivisch dargestellt,
Figur 4 einen Längsschnitt durch die Abdeckkappe entlang der Linie IV-IV in Figur 3,
vergrößert gezeichnet,
Figur 5 einen Querschnitt entlang der Linie V-V durch die Anordnung gemäß Figur 2,
Figur 6 einen Querschnitt entlang der Linie VI-VI durch eine andere Ausführungsform der Anordnung gemäß Figur 5,
Figur 7 eine Vormontagestellung von Wischblatt und Abdeckkappe zueinander,

### Beschreibung der Ausführungsbeispiele

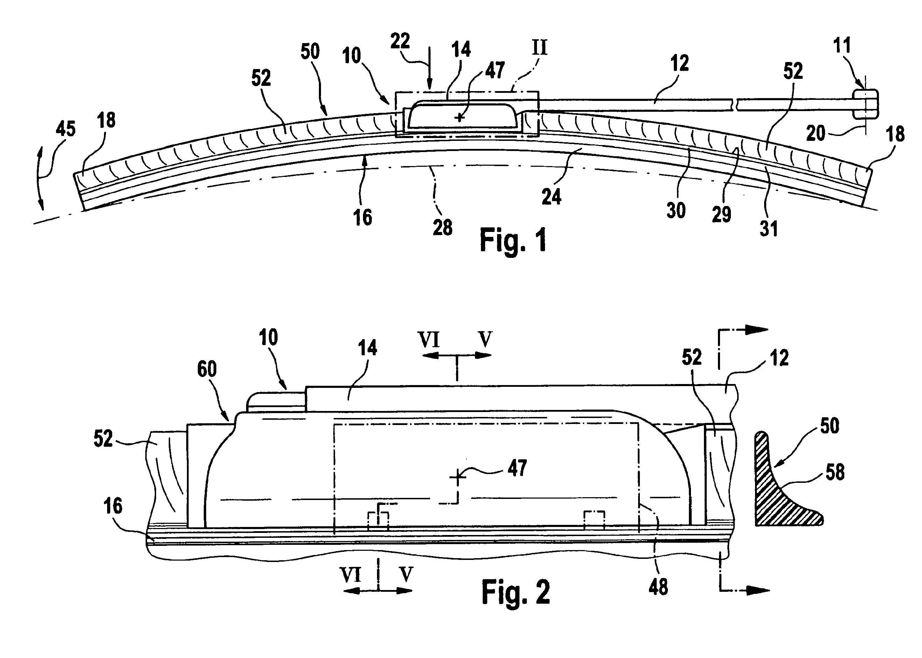

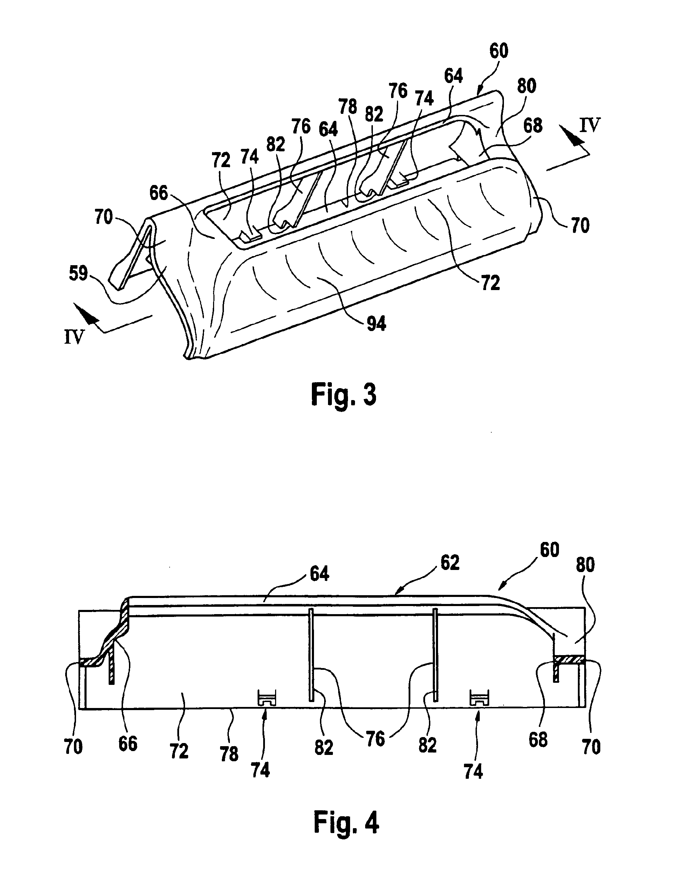

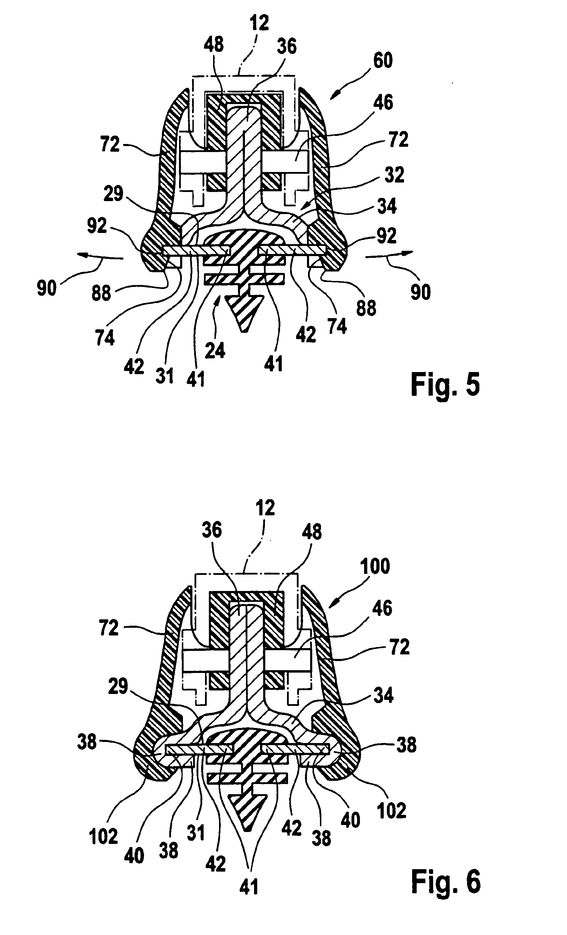

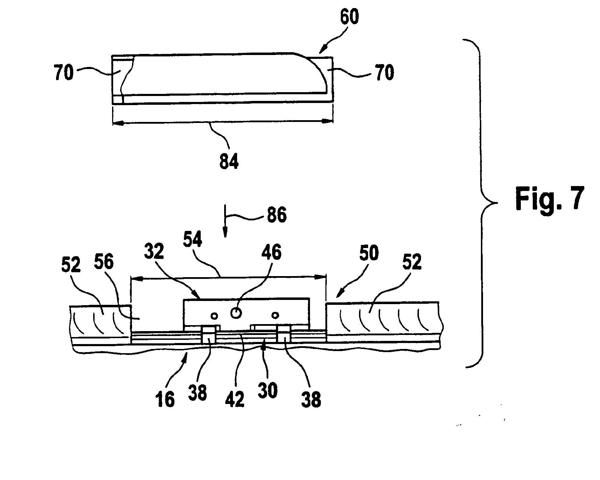

Bei einer ersten Ausführungsform eines erfindungsgemäßen Wischhebel 10 (Figur 1) gehört zu diesem ein einendig an einem nicht dargestellten Kraftfahrzeug geführter, angetriebener Wischerarm 12. Das angetriebene Ende des Wischerarms ist in Figur 1 mit der Bezugszahl 11 versehen worden. An dem anderen, freien Ende 14 des Wischerarms ist ein langgestrecktes, zum Wischhebel 10 gehörendes Wischblatt 16 angelenkt. Der Wischerarm 12 ist an seinem Antriebsende 11 so gelagert, dass er während des Wischbetriebs in einer auf der Zeichnungsebene stehenden Ebene um eine Pendelachse 20 zwischen Umkehrlagen pendelbar ist. Dabei wird das Wischblatt 16 quer zu seiner Längserstreckung über die zu wischende Scheibe bewegt, wobei es mit einer gummieelastischen Wischleiste 24 an der Oberfläche 28 der zu wischenden Scheibe anliegt. Die Wischleiste 24 ist längsachsenparallel mit einem bandartig langgestrecklen, federelastischen Tragelement 30 verbunden, an dessen von der Scheibe abgewandten oberen Bandfläche 29 ein Kupplungsteil 32 sitzt (Figuren 5 und 7), über welches das Wischblatt 16 mit dem Wischerarm 12 zur Bildung des Wischhebels gelenkig verbunden ist. Die Wischleiste 24 ist somit an der unteren, der Scheibe zugewandten Bandfläche 31 des Tragelements 30 angeordnet. Das abschnittsweise im Querschnitt T-förmige Kupplungsteil 32 ist mit seinem T-Kopf 34 dem Tragelement 30 zugewandt und umgreift mit am T-Kopf angeordneten Krallen 38 die voneinander abgewandten äusseren Längsstreifen 40 des Tragelements 30. Das Kupplungsteil 32 wird an diesen Krallen mit dem Tragelement 30 verbunden, beispielsweise verschweißt und/oder zum Zusammenpressen der Krallen an diesem festgelegt. Das Tragelement 30 umfasst beim Ausführungsbeispiel zwei Federschienen 42, welche in einer gemeinsamen Ebene liegend sich parallel zueinander erstrecken. Die einander zugewandten inneren Längsstreifen 41 der Federschienen 42 liegen in randoffenen Längsnuten der Wischleiste 24. Der T-Fuß36 des Kupplungsteils 32 erstreckt sich vom Tragelement 30 weg und ist von einem Gelenkbolzen 46 durchdrungen, von dem in den Figuren 5 und 6 dessen beiden aus dem T-Fußragenden Enden sichtbar sind. An diesem Gelenkbolzen beziehungsweise an dessen freiliegenden Enden greift der Wischerarm 12 (in den Figuren 5 und 6 strichpunktiert gezeichnet) mit entsprechend ausgebildeten Lagerausnehmungen an. Zwischen dem T-Fuß 36 und dem Wischerarm 12 befinden sich noch ein vorzugsweise aus einem Kunststoff hergestellter Adapter 48, über welchen eine betriebssichere Verbindung zwischen Wischerarm 12 und Wischblatt 16 zur Bildung des Wischhebels 10 sichergestellt ist. Aus den Figuren 5 und 6 ist ersichtlich, dass der Gelenkbolzen 46 beziehungsweise dessen Gelenkachse 47 sich im Wesentlichen in Richtung der Pendel- oder Arbeitsbewegung des Wischhebels 10 erstreckt. Wie Figur 1 zeigt, ist die zu wischende Oberfläche 28 der Scheibe gekrümmt. Da die Linie 28 die stärkste Krümmung der Scheibenoberfläche darstellen soll, ist klar ersichtlich, dass die Krümmung des mit seinen beiden Enden 18 an der Scheibenoberfläche anliegenden, noch unbelasteten Wischblatts 16 stärker ist als die maximale Scheibenkrümmung. Unter einemüber dem Wischerarm 12 ausgeübten, in Richtung des Pfeiles 22 (Figur 1) wirkenden Anpressdrucks legt sich das Wischblatt mit seiner an der unteren Bandfläche 31 des Tragelements 30 angeordneten gummieelastischen Wischleiste 24über seine gesamte Länge an der Scheibenoberfläche 28 an. Dabei baut sich im aus Metall gefertigten, federelastischen Tragelement 30 eine Spannung auf, welche für eine ordnungsgemäße Anlage der Wischleiste 24 über deren gesamte Länge an der Scheibe sowie für eine gleichmäßige Verteilung des Anpressdrucks 22 sorgt. Weiter sorgt das Tragelement 30 mit seinen Federschienen 42 für die notwendige Querstabilisierung der gummieelastischen Wischleiste 24. Weil die in aller Regel sphärisch gekrümmte Scheibe nicht einen Abschnitt einer Kugeloberfläche darstellt, mußsich das Wischblatt 16 gegenüber dem Wischerarm 12 während seiner Wischbewegung ständig der jeweiligen Lage und dem Verlauf der Scheibenoberfläche 28 anpassen können. Deshalb ist die eine Schwingbewegung um die Gelenkzapfenachse 47 ermöglichende leichtgängige Gelenkverbindung zwischen dem Wischerarm 12 und dem Wischblatt 16 notwendig. Weiter ist aus Figur 1 in Verbindung mit Figur 5 zu entnehmen, dass die Gelenkachse 47 auch quer zur Richtung der Anlegekraft (Pfeil 22) ausgerichtet ist. Aus den Figuren 1, 2 und 7 ist zu entnehmen, dass das Wischblatt an der oberen Bandfläche 29 des Tragelements 30 mit einer beispielsweise mit der Wischleiste 24 verbundene Windabweisleiste 50 versehen ist, welche zwei Teilabschnitte 52 umfasst, die in Längsrichtung des Wischblatts gesehen mit einem Abstand 54 voneinander liegen (Figur 7). Es ergibt sich somit eine Aussparung 56 in der Windabweisleiste 50, welche die Anordnung des Kupplungsteils 32 am Tragelement 30 ermöglicht. Die Windabweisleiste 50 ist an ihrer einen, vom Fahrtwind hauptsächlich angeströmten Längsseite mit einer Anströmkehlung 58 versehen (Figur 2). Um die Gelenkverbindung zwischen dem Wischerarm 10 und dem Wischblatt 12 beziehungsweise zwischen dessen Kupplungsteil 32 abzudecken und einen harmonischen Übergang zwischen den einander zugewandten Enden der Teilabschnitte 52 der Windabweisleiste 50 zu erreichen, gehört zum Wischhebel 10 noch eine Abdeckkappe 60, deren Aufbau insbesondere anhand der Figuren 3 und 4 erläutert werden soll. Sie hat einen trogförmigen Mittelabschnitt 62, dessen Trogboden weitgehend entfernt ist, so dass sich eine Durchtrittsöffnung 64 ergibt. Wie insbesondere Figur 3 zu entnehmen ist, schließen sich über die beiden Quer-Endwände 66 und 68 hinausragende Verlängerungen 70 an, deren Ausformungen an die Querschnittsform der Windabweisleiste 50 angepasst ist und die somit ebenfalls eine Anströmkehlung 59 aufweisen. Die beiden Längswände 72 der aus einem elastischen Kunststoff hergestellten Abdeckkappe 60 sind mit elastisch auslenkbaren Rastmitteln versehen, welche beim Ausführungsbeispiel als Rastnasen 74 ausgebildet sind. Dabei sind an jeder Längswand 72 mit Abstand voneinander jeweils zwei Rastnasen 74 angeordnet und die Rastnasen der beiden Langswände 72, liegen einander paarweise gegenüber (Figuren 3 und 5). Weiter sind an jeder Längswand insbesondere zwischen den Rastnasen 74 Stütz- oder Versteifungswände 76 angeordnet, die sich im Wesentlichen von der Durchtrittsöffnung 74 bis nahe dem Trogrand 87 der Abdeckkappe 60 erstrecken. Die eine Querwand 68 der Abdeckkappe 60 ist mit einer Auskehlung 80 versehen, die sich von der Durchtrittsöffnung 64 aus über einen kleinen Teilabschnitt zum Trogrand 78 hin erstreckt und am Ende der Verlängerung 68 mündet. An den dem Trogrand 78 zugewandten Enden der Stützrippen 76 sind diese passend auf die Breite des Tragelements 30 ausgespart, so dass sich Abstützungen 82 ergeben. An der einen Längswand 72 der Abdeckkappe 60 ist in Fortführung der Anströmkehlung 58 der Windabweisleiste 50 beziehungsweise in Fortführung der Anströmkehlung 59 an den Verlängerungen 70 ebenfalls eine Hohlkehle 94 ausgebildet.

Die Montage der Abdeckkappe am Wischblatt wird anhand der Figuren 5 und 7 im folgenden erläutert.

Wie aus der Vormontageposition in Figur 7 ersichtlich ist, ist die Gesamtlänge 84 der Abdeckkappe mit ihren Verlängerungen 70 größer als der Abstand 54 zwischen den beiden Teilabschnitten 52 der Windabweisleiste 50. Dies wird durch die beiden Verlängerungen 70 bewirkt. Aus der Vormontageposition (Figur 7) heraus wird die Kappe 60 in Richtung des Pfeiles 86 auf das Wischblatt 16 aufgesetzt. Während der Aufsetzbewegung lenken die Rastnase 74 aufgrund ihrer Formgebung, beispielsweise der Anformung von Anlaufschrägen 88 in Richtung der Pfeile 90 in Figur 5 aus, wenn die Anlaufschrägen 88 gegen die Längsstreifen 40 des Tragelements 30 stoßen. Die Ausleukung wird erfindungsgemäß durch eine elastische Auslenkung der Längswände 72, der Abdeckkappe 60 erreicht Die Auslenkung kann zusätzlich durch bestimmte, dem Fachmann bekannte Querschnittsveränderungen der Rastnasen erreicht werden. Die Montagebewegung (Pfeil 86) der Abdeckkappe ist beendet, wenn die Abstützungen 82 an den Stützrippen 76 an der oberen Bandfläche 29 des Tragelements 30 aufsitzen. In dieser Position können die Rastnasen 74 wieder in ihre Ausgangsposition zurückfedern, weil die äusseren Längsstreifen 40 des Tragelements 30 in Hinterschnitte 92 der Rastnasen 74 gelangen können, wobei die Rastnasen das Tragelement 30 untergreifen und somit einen sicheren Sitz der Abdeckkappe 60 am Wischblatt 16 bewirken. In der nun erreichten Betriebsposition der Abdeckkappe 60 überdecken die Verlängerungen 70 der Abdeckkappe jeweils die einander zugewandten Endabschnitte der Teilabschnitte 52 der Windabweisleiste 50. Da die Formgebung der Verlängerungen im Wesentlichen eine Fortführung der Kontur der Windabweisleiste 50 darstellt, ist ein harmonischer Übergang zwischen der Windabweisleiste und der Abdeckkappe sichergestellt. Darüberhinaus kann auch der Mittelabschnitt 62 entsprechend den sich jeweils ergebenden räumlichen Möglichkeiten ebenfalls mit einer zumindest geringfügigen Hohlkehle 94 versehen werden, damit sich eine strömungsgünstige. Oberfläche der Abdeckkappe ergibt, welche zu einem geräuscharmen Betrieb des Wischhebels 10 beitragen kann.

Nachdem die Abdeckkappe mit dem Wischblatt verbunden ist, kann die weitere Montage des Wischhebels erfolgen, indem das freie Ende 14 des Wischerarms 12 durch die Durchtrittsöffnung 64 hindurchgeführt und die Gelenkverbindung hergestellt wird. Je nach Ausführung der Gelenkverbindung kann es aber auch nötig sein, den Wischerarm zuerst durch die Durchtrittsöffnung 64 der noch losen Abdeckkappe zu stecken, die Gelenkverbindung herzustellen und erst dann die Abdeckkappe in der beschriebenen Weise auf das Wischblatt aufzurasten.

Eine alternative Befestigungsmöglichkeit einer Abdeckkappe 100 am Wischhebel 10 ist in Figur 6 dargestellt. Im Gegensatz zu der eben beschriebenen Ausführungsform, bei welcher die Rastnasen 74 am Tragelement 30 angreifen und somit neben den Krallen 38 des Kupplungsteils 32 plaziert sein müssen, umgreifen die Sicherungs- oder Haltekrallen 102 der Abdeckkappe 100, die Krallen 38 des Kupplungsteils 32. Sie sind also so plaziert und ausgeformt, dass sie entsprechend der Anordnung nach Figur 6 am Wischblatt angreifen. Die Montage der Abdeckkappe 100 entspricht in ihrem Ablauf der Montage bei der Abdeckkappe 60 gemäß Figur 5. Ein Vorteil der Ausführungsform gemäß Figur 6 kann darin bestehen, dass am Tragelement 30 lediglich die Krallen 38 des Kupplungsteils 32 angreifen, so dass keine zusätzliche Versteifung des Mittelabschnitts des Tragelements 30 erreicht wird. In allen weiteren Merkmalen entspricht die Abdeckkappe 100 gemäß Figur 6 der Abdeckkappe 60 gemäß den Figuren 3 bis 5. Auch der Aufbau des Wischhebels entspricht der obigen Beschreibung.

Aus der vorhergehenden Beschreibung wird deutlich, dass die Abdeckkappe 60 mit elastisch auslegbaren Rastmitteln 74 beziehungsweise 102 versehen ist, denen Gegenrastmittel 40 beziehungsweise 38 des Wischblatts 16 zugeordnet sind.

## Patentansprüche

1. Wischblatt (16) zum Reinigen von Scheiben, insbesondere von Kraftfahrzeugen, das mit einem bandartig langgestreckten, federelastischen Tragelement (30) versehen ist, welches an seiner der Scheibe (28) zugewandten unteren Bandfläche (31) eine an diese anlegbare langgestreckte, gummieelastische Wischleiste (24) aufweist, an dessen oberen Bandfläche (29) insbesondere im Längsmittelbereich des Tragelements ein Kupplungsteil (32) zum Anschliessen des Wischblatts (16) an einen Wischerarm (12) sitzt und das Wischblatt (16) mit einer Kappe (60, 160) zum Abdecken des Anschlussbereiches zwischen Wischblatt (16) und Wischerarm (12) versehen ist, wobei die im Querschnitt etwa U-förmige Abdeckkappe (60) aus einem elastischen Kunststoff gefertigt und mit elastisch auslenkbaren Rastmitteln (74) versehen ist, denen Gegenrastmittel (40) des Wischblatts zugeordnet sind, **dadurch gekennzeichnet, dass** die Abdeckkappe (60) einen trogförmigen Mittelabschnitt (62) mit einem weitgehend entfernten Trogboden aufweist, so dass sich eine Durchtrittsöffnung (64) zur Durchführung eines freien Endes (14) des Wischerarms (12) ergibt und die Rastmittel (74) an Längswänden (72) der Abdeckkappe (60, 160) angeformt sind und die Längswände (72) beim Verrasten elastisch auslenken.

2. Wischblatt nach Anspruch 1, **dadurch gekennzeichnet, dass** die Rastmittel (74) Anlaufschrägen (88) aufweisen.

3. Wischblatt nach Anspruch 1 oder 2, **dadurch gekennzeichnet, dass** an jeder Längswand (72) Stütz- oder Versteifungswände (76) angeordnet sind.

4. Wischblatt nach Anspruch 3, **dadurch gekennzeichnet, dass** die Stütz- oder Versteifungswände (76) zwischen den Rastmitteln (74) angeordnet sind.

5. Wischblatt nach einem der vorhergehenden Ansprüche, **dadurch gekennzeichnet, dass** Gegenrastmittel des Wischblatts (16) an den äusseren Längskanten (40) des bandartigen Tragelements (30) ausgebildet sind.

6. Wischblatt nach einem der vorhergehenden Ansprüche, **dadurch gekennzeichnet, dass** die Abdeckkappe (60) mit zumindest einer mit der oberen Bandfläche (29) des Tragelements zusammenwirkenden Abstützung (82) versehen ist und dass an die Abdeckkappe (60) elastisch auslenkbare, das Tragelement (30) untergreifende, als Rastmittel dienende Rastnasen (74) angeformt sind.

7. Wischblatt nach einem der vorhergehenden Ansprüche, **dadurch gekennzeichnet, dass** die Gegenrastmittel des Wischblatts (16) an Haltekrallen (38) des Kupplungsteils (32) ausgebildet sind, mit denen das Kupplungsteil am Tragelement (30) festgelegt ist.

8. Wischblatt nach Anspruch 7, **dadurch gekennzeichnet, dass** im Bereich der Haltekrallen (38) des Kupplungsteils (32) die Abdeckkappe (100) an ihrer elastisch auslenkbaren Innenwand mit die Haltekrallen (38) übergreifenden, klammerartigen Sicherungskrallen (102) versehen ist.

9. Wischblatt nach einem der vorhergehenden Ansprüche, **dadurch gekennzeichnet, dass** beidseitig des Kupplungsteils sich zu den Enden des Tragelements erstreckende Windabweisleisten-Teilabschnitte (52) angeordnet sind und dass die Abdeckkappe (60) an ihren Längsenden mit Verlängerungen (70) die ihr zugewandten Endbereiche der Windabweisleisten-Teilabschnitte (52) überdeckt.

10. Wischblatt nach einem der vorhergehenden Ansprüche, **dadurch gekennzeichnet, dass** die Abdeckkappe (60) an ihrer einen Längswand (72) in Fortführung der Anströmkehlung (58) der Windabweisleiste (50) mit einer Hohlkehle (94) versehen ist.

## Claims

1. Wiper blade (16) for cleaning glass panes, in particular of motor vehicles, the wiper blade being provided with a spring-elastic supporting element (30) which is elongated in a manner of a band and, on the lower band surface (31) thereof facing the glass pane (28), has an elongated, rubber-elastic wiper strip (24) which can be placed against said glass pane, and, on the upper band surface (29) thereof, in particular in the longitudinal central region of the supporting element, there is a coupling part (32) for connecting the wiper blade (16) to a wiper arm (12), and the wiper blade (16) is provided with a cap (60, 160) for covering the connecting region between wiper blade (16) and wiper arm (12), wherein the covering cap (60), which is approximately U-shaped in cross section, is manufactured from a flexible plastic and is provided with elastically deflectable latching means (74), to which mating latching means (40) of the wiper blade are assigned, **characterized in that** the covering cap (60) has a trough-shaped central section (62) with a substantially removed trough base, thus producing a passage opening (64) for the passage of a free end (14) of the wiper arm (12), and the latching means (74) are integrally formed on longitudinal walls (72) of the covering cap (60, 160) and elastically deflect the longitudinal walls (72) during the latching operation.

2. Wiper blade according to Claim 1, **characterized in that** the latching means (74) have run-on slopes (88).

3. Wiper blade according to Claim 1 or 2, **characterized in that** supporting or stiffening walls (76) are arranged on each longitudinal wall (72).

4. Wiper blade according to Claim 3, **characterized in that** the supporting or stiffening walls (76) are arranged between the latching means (74).

5. Wiper blade according to one of the preceding claims, **characterized in that** mating latching means of the wiper blade (16) are formed on the outer longitudinal edges (40) of the band-like supporting element (30).

6. Wiper blade according to one of the preceding claims, **characterized in that** the covering cap (60) is provided with at least one support (82) interacting with the upper band surface (29) of the supporting element, and **in that** elastically deflectable latching lugs (74) which engage under the supporting element (30) and serve as latching means are integrally formed on the covering cap (60).

7. Wiper blade according to one of the preceding claims, **characterized in that** the mating latching means of the wiper blade (16) are formed on retaining claws (38) of the coupling part (32), with which the coupling part is fixed to the supporting element (30).

8. Wiper blade according to Claim 7, **characterized in that**, in the region of the retaining claws (38) of the coupling part (32), the elastically deflectable inner wall of the covering cap (100) is provided with clamp-like securing claws (102) which engage over the retaining claws (38).

9. Wiper blade according to one of the preceding claims, **characterized in that** draft-deflecting-strip subsections (52) extending to the ends of the supporting element are arranged on both sides of the coupling part, and **in that** extensions (70) at the longitudinal ends of the covering cap (60) cover those end regions of the draft-deflecting-strip subsections (52) which face said covering cap.

10. Wiper blade according to one of the preceding claims, **characterized in that** one longitudinal wall (72) of the covering cap (60) is provided with a flute (94) as a continuation of the incident-flow fluting (58) of the draft-deflecting strip (50).

## Revendications

1. Balai (16) d'essuie-glace destiné à nettoyer des vitres, en particulier de véhicules automobiles, doté d'un élément élastique de support (30) en forme de ruban allongé qui présente sur sa surface inférieure (31) tournée vers la vitre (28) une latte allongée de balayage (24) en caoutchouc élastique qui peut être placée sur la vitre, une pièce d'accouplement (32) servant à raccorder le balai (16) d'essuie-glace à un bras (12) de balayage reposant sur la surface supérieure (29) du ruban, en particulier dans la partie centrale de la longueur de l'élément de support, le balai (16) d'essuie-glace étant doté d'un capuchon (60, 160) qui recouvre la partie de raccordement située entre le balai (16) d'essuie-glace et le bras (12) de l'essuie-glace, le capuchon de recouvrement (60) dont la forme transversale est sensiblement celle d'un U étant réalisé en une matière synthétique élastique et étant doté de moyens d'encliquetage (74) qui peuvent être déployés élastiquement et auxquels des moyens complémentaires d'encliquetage (40) du balai d'essuie-glace sont associés,
**caractérisé en ce que**
le capuchon de recouvrement (60) présente une partie centrale (62) en forme de cuvette dont le fond est largement éloigné, de sorte que l'on obtient une ouverture de passage (64) qui permet de faire passer une extrémité libre (14) du bras (12) d'essuie-glace et
**en ce que** les moyens d'encliquetage (74) sont formés sur des parois longitudinales (72) du capuchon de recouvrement (60, 160) et dévient élastiquement les parois longitudinales (72) lors de l'encliquetage.

2. Balai d'essuie-glace selon la revendication 1, **caractérisé en ce que** les moyens d'encliquetage (74) présentent des rampes d'engagement (88).

3. Balai d'essuie-glace selon les revendications 1 ou 2, **caractérisé en ce que** des parois de soutien ou de renfort (76) sont disposées sur chaque paroi longitudinale (72).

4. Balai d'essuie-glace selon la revendication 3, **caractérisé en ce que** les parois de soutien ou de renfort (76) sont disposées entre les moyens d'encliquetage (74).

5. Balai d'essuie-glace selon l'une des revendications précédentes, **caractérisé en ce que** des moyens complémentaires d'encliquetage du balai (16) d'essuie-glace sont formés sur les côtés longitudinaux extérieurs (40) de l'élément de support (30) en forme de ruban.

6. Balai d'essuie-glace selon l'une des revendications précédentes, **caractérisé en ce que** le capuchon de recouvrement (60) est doté d'au moins un appui (82) qui coopère avec la surface supérieure (29) du ruban de l'élément de support et **en ce que** des becs d'encliquetage (74) aptes à être déviés élastiquement, accrochant par le dessous l'élément de support (30) et servant de moyens d'encliquetage, sont formés sur le capuchon de recouvrement (60).

7. Balai d'essuie-glace selon l'une des revendications précédentes, **caractérisé en ce que** les moyens complémentaires d'encliquetage du balai (16) d'essuie-glace sont formés sur les griffes de maintien (38) de la pièce d'accouplement (32) par lesquelles la pièce d'accouplement est fixée sur l'élément de support (30).

8. Balai d'essuie-glace selon la revendication 7, **caractérisé en ce qu'**au niveau des griffes de maintien (38) de la pièce d'accouplement (32), le capuchon de recouvrement (100) est doté sur sa paroi intérieure élastiquement déformable de griffes de fixation (102) en forme de pinces qui chevauchent les griffes de maintien (38).

9. Balai d'essuie-glace selon l'une des revendications précédentes, **caractérisé en ce que** des parties (52) de languettes pare-vent qui s'étendent jusqu'aux extrémités de l'élément de support sont disposées des deux côtés de la pièce d'accouplement et **en ce que** les extrémités longitudinales les parties d'extrémité du capuchon de recouvrement (60) tournées vers ce capuchon recouvrent des parties (52) des languettes pare-vent par des prolongements (70).

10. Balai d'essuie-glace selon l'une des revendications précédentes, **caractérisé en ce que** le capuchon de recouvrement (60) est doté sur l'une (72) de ses parois longitudinales d'un biseau creux (94) qui prolonge le biseau (58) d'entrée d'écoulement de la languette pare-vent (50).
